(19) 

**Europäisches Patentamt**
**European Patent Office**
**Office européen des brevets**

(11) **EP 4 674 492 A1**

(12) **EUROPEAN PATENT APPLICATION**

(43) Date of publication:
    **07.01.2026 Bulletin 2026/02**

(51) International Patent Classification (IPC):
    ***A63F 13/285*** (2014.01)    ***A63F 13/424*** (2014.01)

(21) Application number: **25185163.0**

(22) Date of filing: **25.06.2025**

(52) Cooperative Patent Classification (CPC):
    **A63F 13/424; A63F 13/285**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **01.07.2024 JP 2024106204**

(71) Applicant: **Nintendo Co., Ltd.**
    **Kyoto-shi, Kyoto 601-8501 (JP)**

(72) Inventor: **AOKI, Takafumi**
    **Kyoto, 601-8501 (JP)**

(74) Representative: **Bardehle Pagenberg**
    **Partnerschaft mbB**
    **Patentanwälte Rechtsanwälte**
    **Prinzregentenplatz 7**
    **81675 München (DE)**

(54) **INFORMATION PROCESSING SYSTEM, ENCODING DEVICE, DECODING DEVICE, METHOD, ENCODING PROGRAM, AND DECODING PROGRAM**

(57) An information processing system (10) includes a first information processing apparatus (100) and a second information processing apparatus (200) including a vibration motor (206). The first information processing apparatus (100) includes frequency instruction data generation means configured to generate frequency instruction data that indicates a control frequency of the vibration motor (206), first encoding means configured to encode the frequency instruction data based on each frequency of each note on a predetermined musical scale, and transmission means configured to transmit the encoded frequency instruction data to the second information processing apparatus (200). The second information processing apparatus (200) includes reception means configured to receive the encoded frequency instruction data, first decoding means configured to decode the encoded frequency instruction data based on the frequency of a tone on the predetermined musical scale, and vibration means configured to cause the vibration motor (206) to vibrate based on the decoded frequency instruction data.

FIG.3

## Description

The present disclosure relates to an information processing system, an encoding device, a decoding device, a method, an encoding program, and a decoding program.

INTRODUCTION

A game system that provides a vibration effect to a user who plays a game has conventionally been available. For example, Japanese Patent Laying-Open No. 2016-202486 discloses a system that controls a vibration signal to be used for a game.

SUMMARY

The conventional system that controls the vibration signal does not take sound into consideration.

(Configuration 1) An information processing system in one embodiment includes a first information processing apparatus and a second information processing apparatus including a vibration motor. The first information processing apparatus includes frequency instruction data generation means configured to generate frequency instruction data that indicates a control frequency of the vibration motor, first encoding means configured to encode the frequency instruction data based on each frequency of each note on a predetermined musical scale, and transmission means configured to transmit the encoded frequency instruction data to the second information processing apparatus. The second information processing apparatus includes reception means configured to receive the encoded frequency instruction data, first decoding means configured to decode the encoded frequency instruction data based on the frequency of a tone on the predetermined musical scale, and vibration means configured to cause the vibration motor to vibrate based on the decoded frequency instruction data.

(Configuration 2) In Configuration 1, the first encoding means is configured to encode a frequency F indicated by the frequency instruction data to an encoded value X (an integer) with an expression 1 or an expression 2 below

$$X = \text{first constant} \times (\log_2(F/\text{second constant})) \qquad \text{... (expression 1)}$$

$$X = \text{first constant} \times (\log_2(F/\text{second constant})) + \text{third constant}$$

$$\text{(expression 2)}.$$

The first constant is one of 5, 7, 12, 15, 17, 19, 22, 31, 34, 41, 53, and 72 or a multiple thereof. The second constant is a frequency of one tone of tones on the predetermined musical scale or a constant that satisfies an expression 3 below

$$\text{Second constant} = \text{frequency of one of tones on predetermined musical scale} \times 2^{N/\text{first constant}} \qquad \text{(expression 3)}.$$

The third constant is a predetermined integer.

(Configuration 3) In Configuration 2, the first encoding means is configured to determine to which of a frequency corresponding to the encoded value X and a frequency corresponding to the encoded value X + 1 the frequency F indicated by the frequency instruction data is closer, when the encoded value X is obtained. When the frequency F indicated by the frequency instruction data is closer to the frequency corresponding to the encoded value X + 1 than the frequency corresponding to the encoded value X, the encoded value X is updated to a value of the encoded value X + 1.

(Configuration 4) In Configuration 2, the predetermined musical scale is a musical scale in a twelve-tone equal temperament. The first constant is twelve or a multiple of twelve.

(Configuration 5) In Configuration 1, the first encoding means selects an encoded value corresponding to a frequency close to the frequency indicated by the frequency instruction data based on a predetermined table that shows correspondence between the frequency of each note on the predetermined musical scale and each encoded value.

(Configuration 6) In Configuration 2, the first constant is a common multiple of one of 5, 7, 12, 15, 17, 19, 22, 31, 34, 41, 53, and 72 and a value corresponding to a first constant in encoding processing by another information processing system.

(Configuration 7) In any of Configurations 1 to 6, the frequency instruction data includes first frequency instruction data and second frequency instruction data for vibration of the vibration motor. The first frequency instruction data is configured to indicate at least a frequency in an effective band of vibration. The second frequency instruction data is configured to indicate at least vibration in an audible band.

(Configuration 8) In Configuration 7, the first frequency instruction data and the second frequency instruction data are configured to indicate both of the effective band of vibration and the audible band.

(Configuration 9) In any of Configurations 1 to 6, the first information processing apparatus further includes amplitude instruction data generation means configured to generate amplitude instruction data that indicates a control amplitude of the vibration motor and second encoding means being configured to linearly encode the amplitude instruction data. The transmission means is configured to transmit each of the encoded frequency instruction data and the encoded amplitude instruction data. The reception means is configured to receive each of the encoded frequency instruction data and the encoded amplitude instruction data. The second information processing apparatus further includes second decoding means configured to linearly decode the encoded amplitude instruction data. The vibration means is configured to cause the vibration motor to vibrate based on the decoded frequency instruction data and the decoded amplitude instruction data.

(Configuration 10) In any of Configurations 1 to 6, the first information processing apparatus further includes adjustment means configured to change the frequency indicated by the frequency instruction data to a frequency in a non-audible range or to cancel an instruction when the indicated frequency is a frequency in an audible range. The information processing system includes deactivation means configured to deactivate the adjustment means in accordance with an instruction from an application.

(Configuration 11) In any of Configurations 1 to 6, the first information processing apparatus is a game machine and the second information processing apparatus is a game controller.

(Configuration 12) An encoding device in one embodiment is an encoding device configured to communicate with a second information processing apparatus including a vibration motor. The encoding device includes frequency instruction data generation means configured to obtain frequency instruction data that indicates a control frequency of the vibration motor, first encoding means configured to encode the frequency instruction data based on each frequency of each note on a predetermined musical scale, and transmission means configured to output the encoded frequency instruction data.

(Configuration 13) A decoding device in one embodiment is a decoding device configured to communicate with a first information processing apparatus. The decoding device includes a vibration motor, reception means configured to receive encoded frequency instruction data, first decoding means configured to decode the encoded frequency instruction data based on a frequency of a tone on a predetermined musical scale, and vibration means configured to cause the vibration motor to vibrate based on the decoded frequency instruction data.

(Configuration 14) A method in one embodiment is a method to be used in an information processing system configured to control vibration instruction data for vibration of a vibration motor. The method includes, as operations to be performed by one or more first processors, generating frequency instruction data that indicates a control frequency of the vibration motor, encoding the frequency instruction data based on each frequency of each note on a predetermined musical scale, and transmitting the encoded frequency instruction data, and includes, as operations to be performed by one or more second processors, receiving the encoded frequency instruction data, decoding the encoded frequency instruction data based ont the frequency of a tone on the predetermined musical scale, and causing the vibration motor to vibrate based on the decoded frequency instruction data.

(Configuration 15) An encoding program in one embodiment causes a computer to perform obtaining frequency instruction data that indicates a control frequency of a vibration motor and first encoding the frequency instruction data based on each frequency of each note on a predetermined musical scale.

(Configuration 16) A decoding program in one embodiment causes a computer to perform obtaining encoded frequency instruction data, the encoded frequency instruction data resulting from encoding of frequency instruction data that indicates a control frequency of a vibration motor, and first decoding the encoded frequency instruction data based on a frequency of a tone on a predetermined musical scale.

The foregoing and other objects, features, aspects, and advantages of this invention will become more apparent from the following detailed description of this invention when taken in conjunction with the accompanying drawings.

BRIEF DESCRIPTION OF THE DRAWINGS

Fig. 1 shows an exemplary illustrative non-limiting drawing illustrating an exemplary information processing system in the present embodiment.
Fig. 2 shows an exemplary illustrative non-limiting drawing illustrating an exemplary flow of encoding and decoding of vibration instruction data.
Fig. 3 shows an exemplary illustrative non-limiting drawing illustrating a first example of vibration instruction data in the present embodiment.
Fig. 4 shows an exemplary illustrative non-limiting drawing illustrating exemplary relation between a frequency of a musical scale and an encoded frequency.

Fig. 5 shows an exemplary illustrative non-limiting drawing illustrating a second example of vibration instruction data in the present embodiment.

Fig. 6 shows an exemplary illustrative non-limiting drawing illustrating an exemplary flowchart showing a procedure in processing for generating vibration instruction data in the present embodiment.

Fig. 7 shows an exemplary illustrative non-limiting drawing illustrating an exemplary flowchart showing a procedure of encoding vibration instruction data performed in a game device.

Fig. 8 shows an exemplary illustrative non-limiting drawing illustrating an exemplary flowchart showing a procedure of decoding the encoded vibration instruction data performed in a game controller.

Fig. 9 shows an exemplary illustrative non-limiting drawing illustrating an exemplary graph showing a value of a maximum allowable voltage for a frequency of a vibration motor.

Fig. 10 shows an exemplary illustrative non-limiting drawing illustrating an exemplary flowchart showing a procedure of switching between sound output states performed in the game controller.

DETAILED DESCRIPTION

The present embodiment will be described in detail with reference to the drawings. The same or corresponding elements in the drawings have the same reference characters allotted and description thereof will not be repeated.

[A. Overview]

An exemplary configuration of an information processing system 10 that controls a vibration motor 206 in the present embodiment will be described.

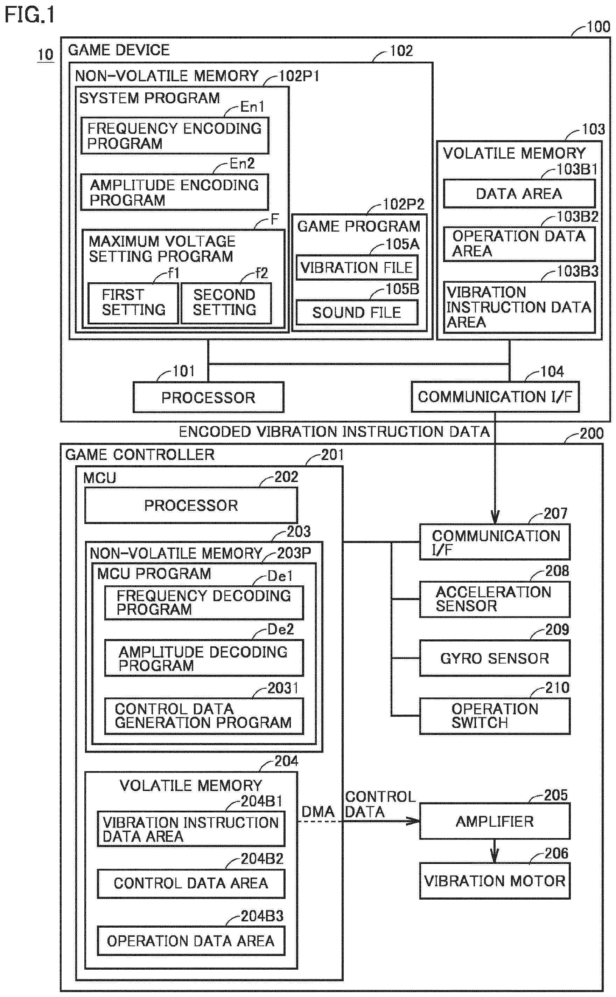

A schematic diagram showing exemplary information processing system 10 in the present embodiment will be described with reference to Fig. 1. Information processing system 10 in the present embodiment is applied to a game system. Information processing system 10 includes a game device 100 and a game controller 200. Game device 100 is an apparatus for providing a game to a user. Game controller 200 is an apparatus held by the user who plays a game, the apparatus being configured to accept input.

Game device 100 shows video images or images on a display apparatus such as a TV monitor, an LCD, an organic electro luminescence (EL), or a head mounted display (HMD) in accordance with a program, and proceeds with a game. The user operates game controller 200 in accordance with video images or images shown on the display apparatus. Game device 100 receives input from the user to game controller 200 and proceeds with the game in accordance with the input.

Game controller 200 in the present embodiment includes vibration motor 206 that vibrates with progress of a game. In the present example, the vibration motor is a voice coil motor. As vibration instruction data for vibration of vibration motor 206 is transmitted from game device 100 to game controller 200, vibration motor 206 vibrates. In the present embodiment, vibration motor 206 can vibrate at a frequency in an audible band in addition to a haptic frequency band (a frequency band within which a human can perceive vibration), and it performs a function as a vibrator that applies vibration to the haptic sense of the user and a function as a speaker that cause the auditory sense of the user to recognize a tone. In the present embodiment, game device 100 is an exemplary "first information processing apparatus" in the present disclosure and game controller 200 is an exemplary "second information processing apparatus" in the present disclosure.

[B. Configuration of Game Device]

Game device 100 includes a processor 101, a non-volatile memory 102, a volatile memory 103, and a communication interface (I/F) 104. Processor 101 is a processing entity (processing means) that performs processing provided by game device 100. Processor 101 reads a system program 102P1 and a game program 102P2 stored in non-volatile memory 102, and develops the same on volatile memory 103 for execution.

Processor 101 is processing circuitry, and it is implemented, for example, by a central processing unit (CPU). The term "processor" herein encompasses also hard-wired circuitry such as an ASIC or an FPGA in addition to normal meaning of processing circuitry that performs processing in accordance with an instruction code described in a program, such as a CPU, a micro processing unit (MPU), or a graphics processing unit (GPU). In the hard-wired circuitry such as an ASIC or an FPGA, a circuit corresponding to processing to be executed is formed in advance. Furthermore, the "processor" herein may also encompass circuitry in which a plurality of functions are integrated, such as a system on chip (SoC). Processor 101 may be, for example, an SoC in which functions of the CPU and the GPU are integrated. An embodiment in which processing performed by a single processor in the present example is performed as being distributed to a plurality of processors in cooperation is also encompassed herein as a modification.

Non-volatile memory 102 is a non-volatile storage device (storage medium) accessible by processor 101, and a solid state drive (SSD), a flash memory, a hard disk, or the like may be employed as the non-volatile memory. Non-volatile memory 102 may be a storage medium attachable to and removable from game device 100, such as an optical disc or a cartridge. System program 102P1 and game program 102P2 are stored in non-volatile memory 102.

System program 102P1 is a program for basic processing of game device 100. System program 102P1 also includes a program for transmission of various types of data stored in volatile memory 103 to game controller 200. Game program 102P2 is a program for execution of a game, and for example, it is stored in a game cartridge or a disc removably attachable to game device 100, or downloaded to non-volatile memory 102 over the Internet. Game program 102P2 includes a vibration file 105A and a sound file 105B. Vibration file 105A and sound file 105B are both files for causing vibration motor 206 to vibrate.

Vibration file 105A includes vibration instruction data generated in accordance with a vibration event for causing the haptic sense of a user to perceive vibration. Sound file 105B includes sound instruction data generated in accordance with a sound event for causing the auditory sense of the user to perceive a tone. In other words, vibration file 105A causes vibration motor 206 to vibrate at such a frequency as applying vibration, the haptic sense, or force from vibration motor 206 to the user and sound file 105B causes vibration motor 206 to vibrate at such a frequency as producing a tone from vibration motor 206.

For example, the vibration event and the sound event may be collision between objects, occurrence of explosion, firing of a gun, travel of a car or the like on a road, or the like in a virtual game space. Vibration and sound corresponding to these events are outputted by vibration of vibration motor 206. The sound event may include utterance by a character in a virtual space, collision between objects, a phenomenon in a game, selection of a user interface (UI) button by the user, timing of turning on SE, or the like. Furthermore, sound generated in accordance with the sound event may include voice data, SE, BGM, a tone from a musical instrument, or the like. In the sound file, a frequency is designated in accordance with a predetermined musical scale. The predetermined musical scale is, for example, a twelve-tone equal temperament or the like.

Vibration file 105A and sound file 105B designate two parameters of a frequency and an amplitude for vibration of vibration motor 206. Game device 100 generates vibration instruction data with the frequency and the amplitude included in vibration file 105A and sound file 105B. In the present example, data included in vibration file 105A and data included in sound file 105B are identical in format to each other, and they are each called "vibration instruction data" herein. In the present example, the vibration instruction data is data including the frequency and the amplitude. The frequency included in the vibration instruction data is exemplary "frequency instruction data" in the present disclosure. The amplitude included in the vibration instruction data is exemplary "amplitude instruction data" in the present disclosure.

Vibration motor 206 is controlled in predetermined cycles based on the vibration instruction data. This cycle is set to 5 ms by way of example. As a plurality of pieces of vibration instruction data are generated and successively transmitted to game controller 200, game controller 200 continuously vibrates for a period equal to or longer than 5 ms. A period of vibration may be determined for each piece of vibration instruction data. Game controller 200 receives the vibration instruction data from game device 100 and causes vibration motor 206 to vibrate based on the frequency and the amplitude designated in the received vibration instruction data.

A frequency band designated by vibration file 105A is, for example, from 40 Hz to 400 Hz. When a low frequency is designated, heavy vibration is outputted, and when a high frequency is designated, sharp vibration is outputted. The frequency band designated by sound file 105B is, for example, from 400 Hz to 3500 Hz. When a low frequency is designated, low sound is outputted, and when a high frequency is designated, high sound is outputted. The frequency band from 40 Hz to 400 Hz is an exemplary "frequency in the effective band of vibration." The frequency band from 400 Hz to 3500 Hz is an exemplary "frequency in the audible range" in the present disclosure. A frequency other than 400 Hz to 3500 Hz is an exemplary "frequency in the non-audible range" in the present disclosure.

The frequency included in the vibration instruction data may be varied, for example, in accordance with magnitude of collision (a speed of collision, a weight of an object that collides, or the like) in the virtual game space, a weight or a material set for an object that collides, or the like. In other words, effectiveness of an effect can be varied by varying the frequency. The frequency may be restricted depending on various conditions of the system.

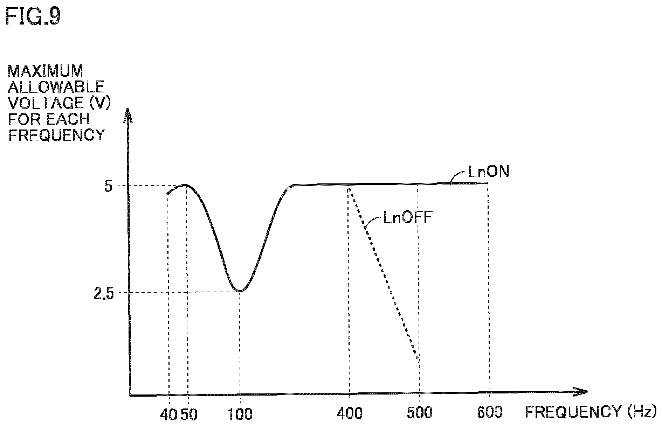

A maximum value is determined in advance for each frequency of input voltage vibration inputted to vibration motor 206. An indicated amplitude of vibration in the present embodiment is normalized with respect to a maximum voltage for each indicated frequency. Specifically, the amplitude included in the vibration instruction data is expressed with a numerical value between 0 and 1.0. When the amplitude is "1.0", a maximum voltage at the frequency included in the vibration instruction data is outputted to vibration motor 206. When the amplitude is "0.5", a voltage as high as 50% of the maximum voltage at the frequency included in the vibration instruction data is outputted to vibration motor 206. The maximum voltage for each indicated frequency will be described later with reference to Fig. 9. A manner of an amplitude instruction in the vibration instruction data is not limited to this example, and the manner of the amplitude instruction does not have to be normalized with respect to a maximum input voltage for each frequency.

Volatile memory 103 is a volatile storage device (storage medium) accessible by processor 101, and for example, a dynamic random access memory (DRAM), a static random access memory (SRAM), or the like may be employed as the volatile memory. Volatile memory 103 is provided with a data area 103B1, an operation data area 103B2, and a vibration instruction data area 103B3. Data area 103B1 is, for example, an area where data generated in execution of game program 102P2 by processor 101 is to temporarily be stored.

Operation data area 103B2 is an area where operation data received from game controller 200 is to temporarily be stored. The operation data refers to data representing input to game controller 200 by the user and detection values from an acceleration sensor 208, a gyro sensor 209, an operation switch 210, and the like.

Vibration instruction data area 103B3 is an area where vibration instruction data for vibration of vibration motor 206 generated as a result of execution of game program 102P2 or the like is to temporarily be stored. In the present embodiment, encoded vibration instruction data which will be described later is also stored in vibration instruction data area 103B3. The term "memory" herein encompasses at least both of non-volatile memory 102 and volatile memory 103.

Game device 100 communicates with game controller 200 through communication interface 104. Communication interface 104 wirelessly communicants with game controller 200, for example, through a not-shown antenna. Game device 100 and game controller 200 may wirelessly communicate with each other in any communication method. Though game device 100 communicates with game controller 200 in accordance with Bluetooth® standards in the present embodiment, other standards such as Wifi® or a communication protocol under a specific standard may be employed. Game device 100 and game controller 200 may communicate with each other through a wire, and in this case, communication interface 104 may be implemented, for example, by a terminal in conformity with universal serial bus (USB) standards or the like.

Game device 100 generates the vibration instruction data based on sensing of occurrence of a vibration event or a sound event with progress of a game. In the present embodiment, game device 100 encodes the vibration instruction data before it transmits the vibration instruction data to game controller 200 such that the vibration instruction data can be transmitted at a capacity of 20 bits per one piece of vibration instruction data.

More specifically, game device 100 encodes the frequency included in the vibration instruction data in 10 bits and encodes the amplitude included in the vibration instruction data in 10 bits. The frequency that has been encoded will be referred to as an "encoded frequency" below, the amplitude that has been encoded will be referred to as an "encoded amplitude" below, and data of 20 bits including the encoded frequency and the encoded amplitude will be referred to as "encoded vibration instruction data" below. Game device 100 transmits the encoded vibration instruction data to game controller 200. An amount of communication is thus smaller than in transmission of non-encoded vibration instruction data from game device 100 to game controller 200. The number of bits to be used for the encoded frequency and the number of bits to be used for the encoded amplitude may be set to any number.

Game device 100 transmits the encoded vibration instruction data to game controller 200. Game device 100 encodes the vibration instruction data with a frequency encoding program En1 and an amplitude encoding program En2 included in system program 102P1. Frequency encoding program En1 and amplitude encoding program En2 are included in system program 102P1 as shown in Fig. 1. Encoding of the vibration instruction data will be described in detail later.

System program 102P1 includes a maximum voltage setting program F for setting a maximum input voltage for each indicated frequency in addition to frequency encoding program En1 and amplitude encoding program En2. Maximum voltage setting program F in the present embodiment is configured to switch between first setting f1 and second setting f2. Maximum voltage setting program F is exemplary "adjustment means" in the present disclosure. First setting f1 is such setting that the maximum input voltage at a frequency in the audible range is equivalent to the maximum input voltage at a frequency in the non-audible range and second setting f2 is such setting that the maximum input voltage at the frequency in the audible range is zero or close to zero or at least lower than the frequency in the non-audible range.

Maximum voltage setting program F is executed based on reception of an instruction from an application program or the user to switch between a state in which vibration at the frequency in the audible range can be outputted from vibration motor 206 and a state otherwise. In other words, game controller 200 is configured to switch between states of sound output by vibration motor 206. Switching between the states of sound output by vibration motor 206 will also be described in detail later.

[C. Configuration of Game Controller]

Game controller 200 includes a micro controller unit (MCU) 201, an amplifier 205, vibration motor 206, a communication interface (I/F) 207, acceleration sensor 208, gyro sensor 209, and operation switch 210.

Game controller 200 is typically a controller in such a form as being held with both hands or one hand of the user and receives input from the user as a result of operation on operation switch 210 with a user's finger. Game controller 200 is not limited to a game controller in such a form as being held by the user's hand. For example, a general-purpose keyboard or mouse including vibration motor 206 may be applicable, or the game controller may be laid on a floor and receive input based on touch of a sole of the user to a sensor.

MCU 201 includes a processor 202, a non-volatile memory 203, and a volatile memory 204. Processor 202, non-volatile memory 203, volatile memory 204, and communication interface 207 are similar in hardware configuration to processor 101, non-volatile memory 102, volatile memory 103, and communication interface 104 described above, respectively. Therefore, description of the configuration thereof will not be repeated. Processor 202 may be lower in processing capability than processor 101 for reduction in cost for game controller 200.

An MCU program 203P is stored in non-volatile memory 203. MCU program 203P includes a frequency decoding program De1, an amplitude decoding program De2, and a control data generation program 2031. Furthermore, MCU program 203P includes a program for performing various types of processing such as a program for transmission of detection values from operation switch 210, acceleration sensor 208, and gyro sensor 209 to game device 100 through communication interface 207 and a program for reception of encoded vibration instruction data from game device 100.

Frequency decoding program De1 is a program for decoding the encoded frequency. Amplitude decoding program De2 is a program for decoding the encoded amplitude. Processor 202 decodes the encoded vibration instruction data with frequency decoding program De1 and amplitude decoding program De2 to generate the decoded vibration instruction data. Control data generation program 2031 is a program for generating control data to be transmitted to amplifier 205 based on the decoded vibration instruction data. The control data is typically data indicating a voltage value of a waveform for driving vibration motor 206.

Volatile memory 204 includes a vibration instruction data area 204B1, a control data area 204B, and an operation data area 204B3. Vibration instruction data area 204B1 is an area where encoded vibration instruction data received from game device 100 and decoded vibration instruction data are to temporarily be stored. Control data area 204B2 is an area where the control data generated by processor 202 is to temporarily be stored. Operation data area 204B3 is an area where the operation data is to temporarily be stored.

Control data stored in control data area 204B2 in volatile memory 204 is transferred to amplifier 205, for example, by direct memory access (DMA). Amplifier 205 in the present embodiment is an amplifier that carries out pulse width modulation (PWM) control at a frequency of 8 kHz. Amplifier 205 determines a duty ratio every 0.125 ms based on the received control data and supplies electric power to vibration motor 206.

Vibration motor 206 is typically a voice coil motor. Vibration motor 206 may be an eccentric motor, a linear resonant actuator (what is called an LRA), a motor including a piezo element, or the like, and the motor of any type is applicable. Vibration motor 206 may be a coin vibration motor. Vibration motor 206 functions also as a speaker that outputs tones. For example, an element that causes air nearby to vibrate, such as cone paper, may be provided in vibration motor 206, or the vibration motor may be structured such that a housing thereof vibrates to emit tones. Vibration motor 206 can provide both of physical vibration and sound to the user who holds game controller 200 where vibration motor 206 is accommodated.

Acceleration sensor 208 detects magnitude of a linear acceleration along directions along predetermined three axes. Acceleration sensor 208 may detect an acceleration in a direction along one axis or directions along two axes. Gyro sensor 209 detects an inclination, an angular velocity, an angular acceleration, and the like of game controller 200 and outputs a result of detection to operation data area 204B3.

Results of detection by acceleration sensor 208 and gyro sensor 209 are outputted to processor 101. Processor 101 in game device 100 can calculate information on motion and/or a posture of game controller 200 based on the results of detection by acceleration sensor 208 and gyro sensor 209.

Operation switch 210 is typically implemented by at least one button, key, and/or stick provided at a surface of game controller 200. Operation switch 210 may be, for example, a button brought in correspondence with a character, such as an A button and a B button, a cross-shaped key for input of upward, downward, left, and right directions, a 3D stick for input of a direction of inclination and an amount of inclination, or the like.

As described above, in information processing system 10 in the present embodiment, the vibration instruction data is transmitted as being encoded, from game device 100 to game controller 200. Vibration motor 206 performs not only a vibration function but also a sound output function. Encoding processing in the present embodiment is designed not only to reduce the amount of communication between game device 100 and game controller 200 but also to express a frequency of each note on the predetermined musical scale when the vibration instruction data is decoded, and for example, it is designed to express all of musical scales and chromatic scales in the twelve-tone equal temperament. In other words, encoding and decoding are calculated such that a frequency of each note on the predetermined musical scale is outputted from vibration motor 206. In the present example, the twelve-tone equal temperament is employed.

[D. Flow of Encoding and Decoding of Vibration Instruction Data]

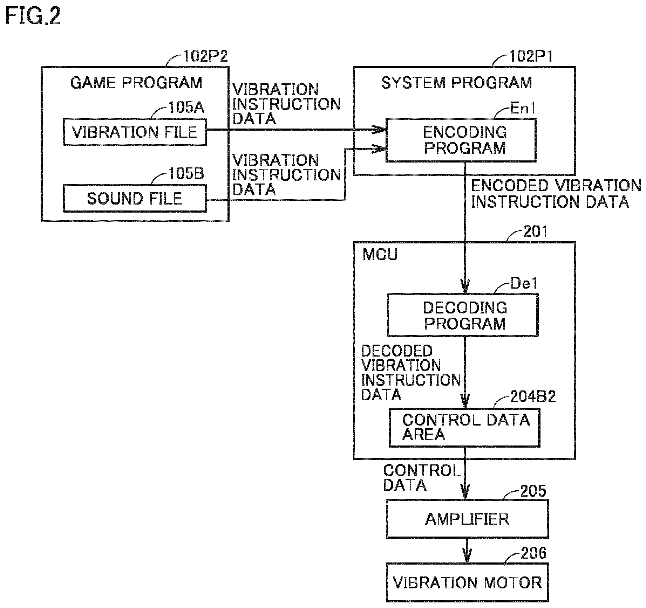

A flow of encoding and decoding of the vibration instruction data will be described with reference to Fig. 2. Game program 102P2 generates vibration instruction data based on vibration file 105A and sound file 105B based on occurrence of an event as the game proceeds, and passes the vibration instruction data to system program 102P1.

Frequency encoding program En1 and amplitude encoding program En2 encode the frequency and the amplitude included in the accepted vibration instruction data, respectively, within a range where each of the frequency and the amplitude can be expressed in 10 bits (0 to 1023). A capacity of the encoded vibration instruction data including the encoded frequency and amplitude is 20 bits. The encoded vibration instruction data is passed from system program 102P1 to MCU 201.

MCU 201 decodes the received encoded vibration instruction data with frequency decoding program De1 and amplitude decoding program De2. MCU 201 thus generates the decoded vibration instruction data to generate control data based on the generated decoded vibration instruction data. MCU 201 has amplifier 205 driven and has vibration motor 206 vibrate based on the control data.

[E. Contents of Vibration Instruction Data]

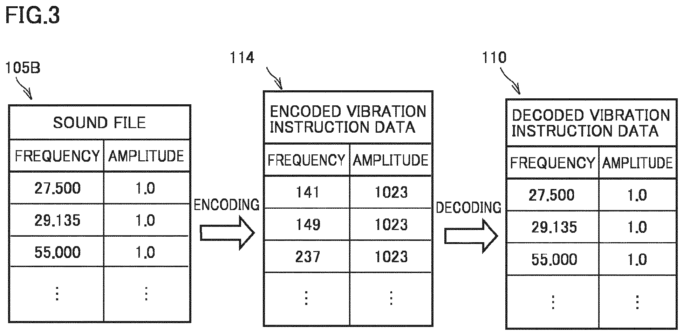

A first example of the vibration instruction data in the present embodiment will be described with reference to Fig. 3. Fig. 3 shows from the left, sound file 105B, vibration instruction data 114 obtained by encoding the sound file, and decoded vibration instruction data 110.

In information processing system 10 in the present embodiment, game device 100 refers to vibration file 105A or sound file 105B in game program 102P2. Vibration instruction data (in some cases, a plurality of pieces of vibration instruction data that are successively reproduced) to be generated for each event is stored in vibration file 105A and sound file 105B. Fig. 3 illustrates an example where a melody A is outputted as a result of occurrence of a specific sound event by way of example of sound file 105B. The vibration instruction data does not have to be stored in advance in a file format but may be generated in real time.

Melody A is tones relating to music, and it is, for example, tones expressing BGM while the game proceeds or tones expressing tones of a played musical instrument arranged in a virtual game space. In other words, the melody is an assembly of successively and sequentially outputted tones and tones that express music. Melody A is combination of a plurality of tones on the musical scale included in the twelve-tone equal temperament. Specifically, melody A is outputted by output of la0 (A0) for 5 ms, output of la#0 (A#0) for 5 ms, and output of la1 (A1) for 5 ms. Melody A may be combination of more tones or a monotone. Sound generated by the sound event may include a tone other than the frequency of the tone on the musical scale. Rather than the melody, SE may be applicable.

The frequency of each musical scale is determined in advance. The frequency of la0 (A0) is "27.500", and the amplitude "1.0" is indicated in the example in Fig. 3. When output of a tone la0 (A0) is desired, the frequency 27.500 Hz is indicated, and a waveform signal at the frequency 27.500 Hz having an allowable maximum voltage as a peak voltage is outputted to vibration motor 206. The sound file may designate the musical scale or the like.

Encoding of the frequency will then be described. Processor 101 encodes the frequency included in the vibration instruction data in accordance with a frequency encoding expression below.

(Frequency encoding expression) Encoded frequency = $96 \times \log_2$(indicated frequency/110)+333　　　　(expression A)

Since the frequency of la0 (A0) is 27.500 Hz, with the frequency encoding expression above, the encoded frequency is 141. The encoded frequency is an exemplary "encoded value X" in the present disclosure. The encoded frequency in the present embodiment is a non-negative integer.

The value expressed as "96" in the frequency encoding expression is an exemplary "first constant" in the present disclosure. The value expressed as "110" in the encoding expression is an exemplary "second constant" in the present disclosure. The value expressed as "333" in the encoding expression is an exemplary "third constant" in the present disclosure. The frequency encoding expression expresses encoding, with each note on the musical scale in the twelve-tone equal temperament being defined as the reference.

When a frequency 29.135 Hz is indicated (in this case, a tone "la#0 (A#0)" is indicated), with the frequency encoding expression, a result of calculation is 149. When a frequency 55.000 Hz is indicated (in this case, a tone "la1 (A1)" is indicated), with the frequency encoding expression, a result of calculation is 237.

Encoding of the amplitude will then be described. Processor 101 encodes the amplitude included in the vibration instruction data with an amplitude encoding expression below. The amplitude is linearly encoded (encoded to a value in proportion to a value of the amplitude) in encoding processing. In the present example, the amplitude is encoded to a value resulting from division of a value in a range from 0 to 1.0 into 1024 equal parts in proportion to the amplitude value.

(Amplitude encoding expression) Encoded amplitude = $\text{amplitude} \times 1023$ 　...

(expression B)

Since the amplitude indicated by the vibration instruction data is each 1.0 in the example in Fig. 3, with the amplitude encoding expression above, the encoded amplitude is 1023.

Thereafter, encoded vibration instruction data 114 including the encoded frequency and the encoded amplitude is transmitted from game device 100 to game controller 200. Processor 202 of game controller 200 decodes encoded vibration instruction data 114 with frequency decoding program De1. Processor 202 decodes the encoded frequency with a frequency decoding expression below. The frequency decoding expression is an expression obtained by transform of the frequency encoding expression, and it is substantially an identical expression.

(Frequency decoding expression) Decoded frequency = $110 \times 2^{(\text{encoded frequency}-333)/96}$     (expression C)

The value expressed as "96" in the frequency decoding expression corresponds to "96" in the frequency encoding expression, that is, an exemplary "first constant." Similarly, the values expressed as "110" and "333" in the frequency decoding expression correspond also to "110" and "333" in the frequency encoding expression, respectively, and they are an exemplary "second constant" and an exemplary "third constant," respectively.

In an example where the encoded frequency is 141, with calculation with the decoding expression, the decoded frequency is 27.500 Hz. In an example where the encoded frequencies are 149 and 237, with calculation with the decoding expression, the decoded frequencies are 29.135 Hz and 55.000 Hz, respectively.

The vibration instruction data shown in Fig. 3 remains the same in numerical value of the frequency it indicates, before encoding and after decoding, and it is reproduced at the frequencies of "la0 (A0)", "la#0 (A#0)", and "lal (A1)". Thus, in the information processing system in the present embodiment, when one of tones on the musical scale in the twelve-tone equal temperament is indicated as the vibration instruction data, each note on the musical scale in the twelve-tone equal temperament can be outputted from vibration motor 206 with the frequency thereof being maintained.

Decoding of the amplitude will then be described. Processor 202 decodes the encoded amplitude with an amplitude decoding expression below.

$$\text{(Amplitude decoding expression) Decoded amplitude} = \text{encoded amplitude}/1023$$

$$... \text{(expression D)}$$

Processor 202 rounds off the value calculated with the amplitude decoding expression to a nearest integer. Consequently, as shown in Fig. 3, the decoded amplitude has a value the same as the value before the amplitude is encoded.

[F. As to Musical Scale]

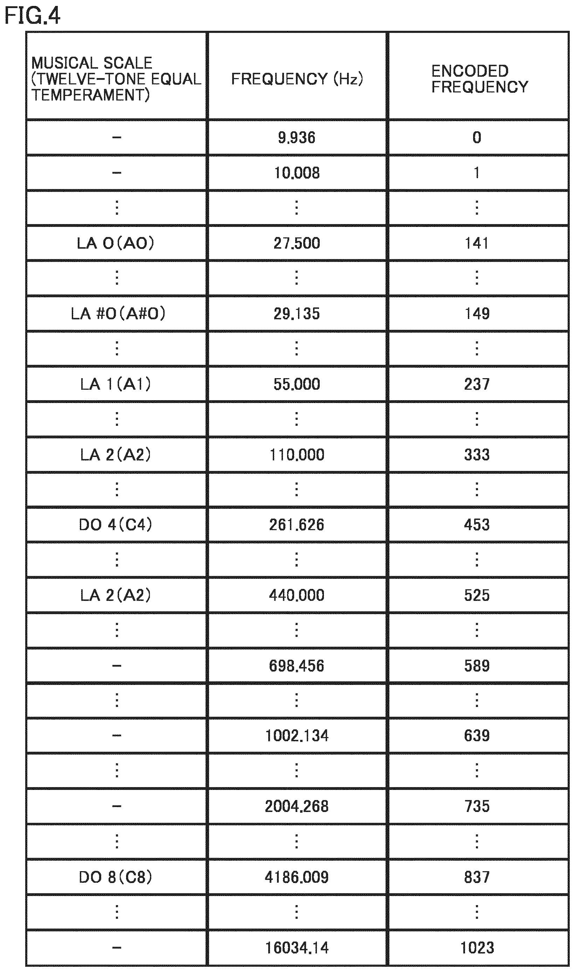

A table showing relation between the frequency of the musical scale in the twelve-tone equal temperament and the encoded frequency will be described with reference to Fig. 4. Fig. 4 shows a part of the musical scale in the twelve-tone equal temperament and a frequency corresponding to the musical scale. The twelve-tone equal temperament refers to the musical scale that expresses an interval of one octave as being divided into twelve equal parts. For example, the musical scale of the piano is composed of eighty-eight tones including "la0 (A0)", "la#0 (A#0)" to "ti (B7)", and "do (C8)". Frequencies are determined in advance for all of eighty-eight tones. Each tone included in the twelve-tone equal temperament can be expressed by a geometric progression having a common ratio of $2^{(1/12)}$, with the first term being defined as 27.500 Hz.

The lowest tone among eighty-eight tones is "la0 (A0)" and the frequency thereof is 27.500 Hz. The second lowest tone is "la#0 (A#0)" and the frequency thereof is approximately 29.135 Hz. The frequency of "la#0 (A#0)" higher by one tone than "la0 (A0)" has a value calculated by multiplying the frequency of "la0 (A0)" by the common ratio ($2^{(1/12)}$). The highest tone among the eighty-eight tones is "do8 (C8)" and the frequency thereof is approximately 4186.009 Hz. Some of other tones included in the twelve-tone equal temperament are also shown in Fig. 4. In the present example, though the value of the frequency of the musical scale calculated by rounding off the value to the third decimal place is indicated, in one aspect, a frequency value to fourth or more decimal places may be indicated.

As shown in Fig. 4, the frequency of "la1 (A1)" higher by one octave (twelve tones) than "la0 (A0)" has a value two times as high as the frequency of "la0 (A0)". The frequency of another tone higher by one octave included in the twelve-tone equal temperament is also two times higher.

The denominator "12" in an exponent part of the common ratio $2^{(1/12)}$ represents the number of tones included in one octave. By changing the denominator in the exponent part of the common ratio, other equal temperaments such as a five-tone equal temperament, a seven-tone equal temperament, a fifteen-tone equal temperament, or a seventeen-tone equal temperament other than the twelve-tone equal temperament can be expressed.

As described above, in the present embodiment, with the frequency decoding expression below, the encoded frequency is decoded to calculate the decoded frequency.

(Frequency decoding expression) Decoded frequency = $110 \times 2^{(\text{encoded frequency}-333)/96}$

In the present example, the encoded frequency can take a value from 0 to 1023. Therefore, a minimum value of the decoded frequency is a value calculated by multiplying 110 by $2^{(-333/96)}$, that is, "9.936 Hz" when the encoded frequency shown in Fig. 4 is 0. A maximum value of the decoded frequency is a value calculated by multiplying 110 by $2^{((1023-333)/96)}$, that is, "16034.140 Hz" when the encoded frequency shown in Fig. 4 is 1023. The common ratio of a progression that can be expressed with the decoded frequency is $2^{(1/96)}$.

The numerical value 110 in the frequency decoding expression is a multiple of "27.5" which is the first term of the twelve-tone equal temperament. The numerical value 96 in the frequency decoding expression is a multiple of twelve that expresses the number of tones included in one octave. The minimum value "9.936 Hz" of the decoded frequency is smaller than the frequency 27.500 Hz of the lowest tone "la0 (A0)" in the twelve-tone equal temperament and the maximum value "16034.140 Hz" of the decoded frequency is larger than a frequency 4186.009 Hz of the highest tone "do8 (C8)" in the twelve-tone equal temperament. The frequency decoding expression above thus expresses the progression including all frequencies of eighty-eight tones in the twelve-tone equal temperament and frequencies of tones equal to or more than eighty-eight tones. The decoded frequency can express all frequencies of eighty-eight tones in the twelve-tone equal temperament.

Therefore, as described with reference to Fig. 3, frequencies corresponding to "la0 (A0)", "la#0 (A#0)", and "la1 (A1)" on the musical scale in the twelve-tone equal temperament are outputted, with the frequencies of "la0 (A0)", "la#0 (A#0)", and "la1 (A1)" being maintained also in decoding. With the frequency encoding and decoding expressions above, the frequency can be encoded and decoded with the frequencies of all of eighty-eight tones included in the twelve-tone equal temperament being maintained.

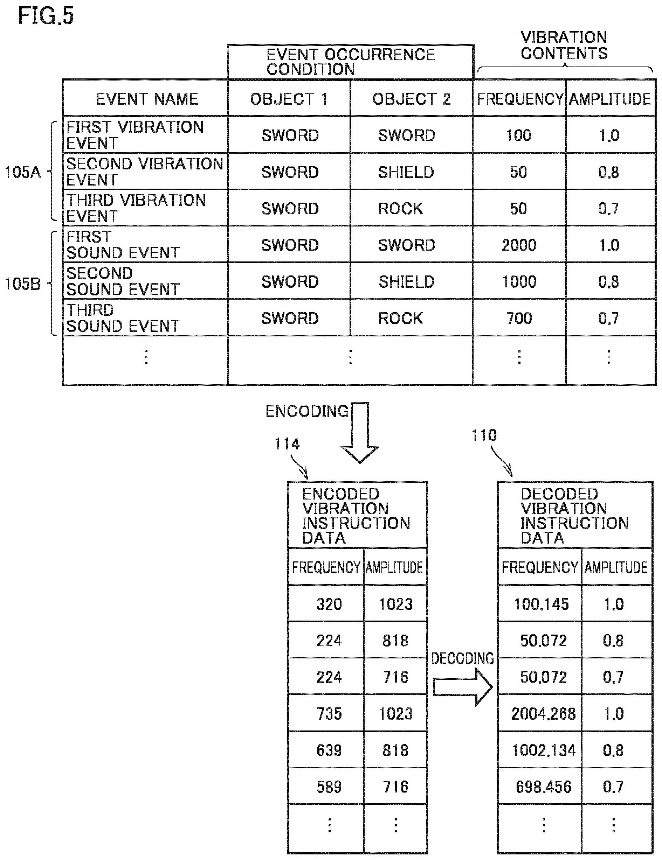

A second example of the vibration instruction data in the present embodiment will be described with reference to Fig. 5. Fig. 5 illustrates control of the vibration motor based on both of the vibration file and the sound file. Fig. 5 shows vibration file 105A and sound file 105B, encoded vibration instruction data 114, and decoded vibration instruction data 110 from the left. Contents of vibration file 105A and sound file 105B in Fig. 5 will be described below.

Similarly to sound file 105B, vibration file 105A also includes an event name, an event occurrence condition, and the frequency and the amplitude as data indicating vibration contents. Each of data including a first vibration event to data including a third vibration event is exemplary vibration file 105A. Each of data including a first sound event to data including a fifth sound event is exemplary sound file 105B in Fig. 5.

Fig. 5 shows exemplary vibration file 105A and sound file 105B when game program 102P2 is an adventure game. Processor 101 that executes game program 102P2 generates the vibration instruction data based on data representing vibration contents. For example, the vibration instruction data for the first vibration event is data (100, 1.0).

An object 1 "sword" and an object 2 "sword" are associated with an event name "first vibration event" as the event occurrence condition. The first vibration event is an event of generation of vibration as a result of collision between the object expressing the sword and the object expressing another sword in a virtual space. A frequency "100" and the amplitude "1.0" are associated with the event name "first vibration event." In other words, on the occurrence of the first vibration event, a waveform signal at a frequency of 100 Hz having a maximum voltage allowable by vibration motor 206 at the frequency of 100 Hz as a peak voltage is outputted to vibration motor 206.

The second vibration event is collision between the sword and a shield in the virtual space. In the second vibration event, a waveform signal at a frequency of 50 Hz having a voltage as high as 80% of a maximum voltage value allowable by vibration motor 206 at the frequency of 50 Hz as a peak voltage is outputted to vibration motor 206.

The third vibration event is collision between the sword and a rock in the virtual space. In the third vibration event, a waveform signal at the frequency of 50 Hz having a voltage as high as 70% of the maximum voltage value allowable by vibration motor 206 at the frequency of 50 Hz as a peak voltage is outputted to vibration motor 206.

The object 1 "sword" and the object 2 "sword" are associated with an event name "first sound event." The first sound event is an event to generate sound for expressing tones of collision between the object representing the sword and the object representing the sword in the virtual space of the game. The frequency "2000" and the amplitude "1.0" are associated with the event name "first sound event." In the first sound event, a waveform signal at a frequency of 2000 Hz having the maximum voltage value allowable by vibration motor 206 at the frequency of 2000 Hz as a peak voltage is outputted to vibration motor 206.

The second sound event is collision between the sword and the shield in the virtual space. In the second sound event, a waveform signal at the frequency of 1000 Hz having a voltage as high as 80% of the maximum voltage value allowable by vibration motor 206 at the frequency of 1000 Hz as a peak voltage is outputted to vibration motor 206. The third sound event is collision between the sword and the rock in the virtual space. In the third sound event, a waveform signal at a frequency of 700 Hz having a voltage as high as 70% of the maximum voltage value allowable by vibration motor 206 at the frequency of 700 Hz as a peak voltage is outputted to vibration motor 206.

Thus, in the present embodiment, as a result of collision between the objects in the virtual space, two pieces of vibration instruction data to output vibration and sound are generated. Specifically, when the sword and the sword collide against each other in the virtual space, the vibration instruction data based on the first vibration event and the vibration instruction data based on the first sound event are generated. Game controller 200 thus outputs both of vibration and sound at the same timing in order to express collision between the objects in the virtual space. The vibration instruction data based on the first vibration event is exemplary "first vibration instruction data" in the present disclosure and the vibration instruction data based on the first sound event is exemplary "second vibration instruction data" in the present disclosure.

Encoding of the frequency in Fig. 5 will then be described. Since the frequency indicated by the vibration instruction data based on the first vibration event is 100 Hz, with the frequency encoding expression (expression A) above, the encoded frequency is 319.7996617 and the encoded value is an integral value which is 319. Then, processor 101 performs approximate value specifying processing for determining whether "319" or "320" is appropriate as the encoded frequency. The approximate value specifying processing will be described later. As a result of the approximate value specifying processing, as shown in Fig. 5, the encoded frequency based on the first vibration event is 320.

In examples of the second and third vibration events where the frequency 50 Hz is indicated, with the frequency encoding expression (expression A), the encoded frequency is calculated as 223.7996617 and the encoded value is 223. As a result of the approximate value specifying processing, a value "224" is the encoded frequency as shown in Fig. 5. Similarly, Fig. 5 shows the encoded frequencies also for the frequencies 2000 Hz, 1000 Hz, and 700 Hz.

Since the amplitude indicated by the vibration instruction data based on the first vibration event is 1.0, with the amplitude encoding expression (expression B) above, the encoded amplitude is 1023. In examples of the second vibration event and the second sound event in which the amplitude 0.8 is indicated, with the amplitude encoding expression (expression B), the encoded amplitude is calculated as 818.4. The numerical value of the amplitude is rounded off to a nearest integer. Fig. 5 shows a value "818" rounded off to the nearest integer as the encoded amplitude. Exemplification of other data in connection with encoding of the amplitude is not provided.

In an example where the encoded frequency is 320, calculation with the decoding expression (expression C) gives the decoded frequency 100.1447546 Hz. Processor 202 sets the number of significant digits of a floating point (for example, the sixth decimal place). In other words, the decoded frequency based on the first vibration event is 100.145 Hz. Fig. 5 shows the decoded frequency calculated with the frequency decoding expression (expression C) also for the event other than the first vibration event. Processor 202 rounds off a value calculated with the amplitude decoding expression (expression D) above to a nearest integer. Consequently, as shown in Fig. 5, the decoded amplitude has a value the same as that before the amplitude is encoded.

[G. Procedure of Processing for Generating, Encoding, and Decoding Vibration Instruction Data]

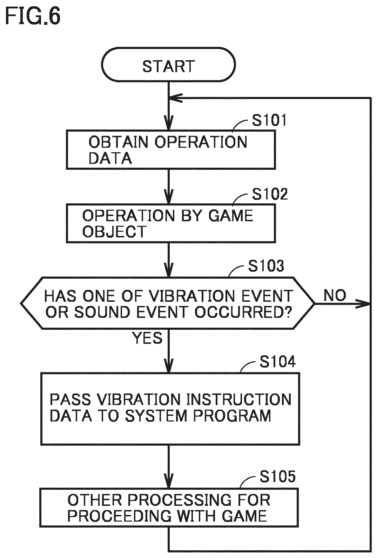

Processing performed by processor 101 of game device 100 will be described below in detail with reference to a flowchart. A flowchart showing a procedure of processing for generating vibration instruction data in the present embodiment will be described with reference to Fig. 6. Processing in the flowchart shown in Fig. 6 is performed by execution of game program 102P2 by processor 101 and started to be performed in response to start of execution of game program 102P2.

Processor 101 obtains operation data (step S101). Processor 101 has a game object operate based on the received operation data (step S102). The game object may be, for example, a player character in an adventure game, a vehicle body in a car racing game, or the like.

Processor 101 determines whether or not a vibration event and/or a sound event has/have occurred in the game based on operation of the game object or on an in-game event irrelevant to the operation of the game object (step S103).

When neither of the vibration event and the sound event has occurred in the game (NO in step S103), processor 101 has the process return to step S101. When the vibration event or the sound event has occurred in the game (YES in step S103), processor 101 generates the vibration instruction data and passes the generated vibration instruction data to system program 102P1 (step S104).

Processor 101 passes the vibration instruction data to system program 102P1 and thereafter has the process return to step S101. While the game is being executed, processor 101 repeatedly performs the processing in steps S101 to S104. Game device 100 in the present embodiment thus generates the vibration instruction data based on occurrence of the vibration event or the sound event as the game proceeds, and passes the vibration instruction data to system program 102P1. After processor 101 performs step S104, it performs other processing to proceed with the game (step S105).

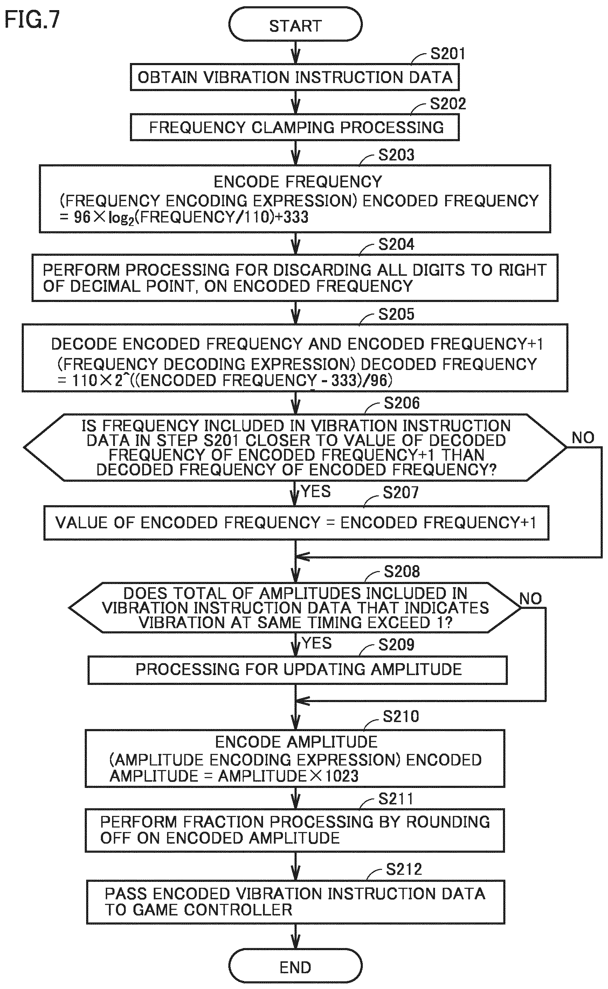

A flowchart showing a procedure of encoding the vibration instruction data performed in game device 100 will be described with reference to Fig. 7. Processing in the flowchart shown in Fig. 7 is performed by execution of system program 102P1 by processor 101. The processing in the flowchart shown in Fig. 7 is performed for each piece of amplitude instruction data. When two pieces of amplitude instruction data are generated at the same timing, processor 101 performs the processing in the flowchart shown in Fig. 7 in parallel on the two pieces of amplitude instruction data.

The flowchart shown in Fig. 7 is performed based on passing of the vibration instruction data from game program 102P2 to system program 102P1. Processor 101 successively obtains the vibration instruction data generated by game program 102P2 and buffered (step S201). Processor 101 performs frequency clamping processing (step S202). The clamping processing is exception processing for a case where a frequency exceeding a range of frequencies that can be expressed with the decoding expression (expression C) described above is designated by the vibration instruction data.

As described above, the minimum value of the decoded frequency is "9.936 Hz" and the maximum value of the decoded frequency is "16034.140 Hz". Therefore, when a frequency lower than "9.936 Hz" is designated by the game program in step S202, processor 101 rewrites the frequency included in the vibration instruction data to "9.936 Hz". Alternatively, when a frequency higher than "16034.140 Hz" is designated by the game program in step S202, processor 101 rewrites the frequency included in the vibration instruction data to "16034.140 Hz".

Processor 101 then encodes the frequency included in the vibration instruction data based on the frequency encoding expression (expression A) above (step S203). In other words, the encoded frequency is calculated. Processor 101 then performs fraction processing for discarding all digits to the right of the decimal point of the encoded frequency calculated in step S203 (step S204).

Processor 101 decodes the encoded frequency calculated in step S204 and a value calculated by adding one to the encoded frequency, with the decoding expression (expression C) described above (step S205). Furthermore, processor 101 determines to which of the decoded frequency obtained by decoding the encoded frequency calculated in step S204 and the decoded frequency obtained by decoding the encoded frequency, to which one has been added in step S205, the frequency included in the vibration instruction data obtained in step S201 is closer (step S206). In step S205, so long as a table of the frequency value and the encoded value is held, the decoded value does not have to be calculated each time.

When the decoded frequency obtained by decoding the encoded frequency, to which one has been added in step S205, is closer to the frequency included in the vibration instruction data obtained in step S201 (YES in step S206), processor 101 updates the encoded frequency to a value of the encoded frequency, to which one has been added in step S205 (step S207). When the decoded frequency obtained by decoding the encoded frequency calculated in step S204 is closer to the frequency included in the vibration instruction data obtained in step S201 (NO in step S206), processor 101 sets the encoded frequency calculated in step S204 as the encoded frequency. Processing for calculating a fraction of the frequency shown in steps S204 to S207 corresponds to the "approximate value specifying processing" described above.

Processor 101 determines whether or not the total of amplitudes included in the vibration instruction data that indicates vibration at the same timing exceeds one (step S208). The vibration instruction data that indicates vibration at the same timing refers, for example, to the vibration instruction data based on the first vibration event and the vibration instruction data based on the first sound event described with reference to Fig. 5. Timing of start of vibration and timing of end of vibration do not have to be the same, and the timings should only partially overlap.

Processor 101 updates the amplitude in each of pieces of the vibration instruction data in order to avoid vibration at the amplitude exceeding one at the same timing. Specifically, the total value of the indicated amplitude in the first vibration event and the indicated amplitude in the first sound event is "2.0" and exceeds one (YES in step S208). In this case, processor 101 performs processing for updating the amplitude (step S209).

The processing for updating the amplitude is processing for calculation again such that the total value of the indicated amplitudes is "1.0" while a ratio between the indicated amplitude in the first vibration event and the indicated amplitude in the first sound event is maintained. Since the ratio between the indicated amplitude in the first vibration event and the indicated amplitude in the first sound event is 1: 1, the indicated amplitude in the first vibration event and the indicated amplitude in the first sound event are updated to "0.5" and "0.5", respectively.

Processor 101 then encodes the amplitude included in the updated vibration instruction data based on the amplitude encoding expression (expression B) above (step S210). When the total of the indicated amplitudes does not exceed one (NO in step S208), processor 101 does not perform the processing for updating the amplitude but encodes the amplitude included in the vibration instruction data based on the amplitude encoding expression (expression B) above (step S210). In other words, the encoded amplitude is calculated. Processor 101 performs fraction processing for rounding off the encoded amplitude to a nearest integer (step S211).

Processor 101 passes the encoded vibration instruction data including the encoded frequency and the encoded amplitude to game controller 200 (step S212).

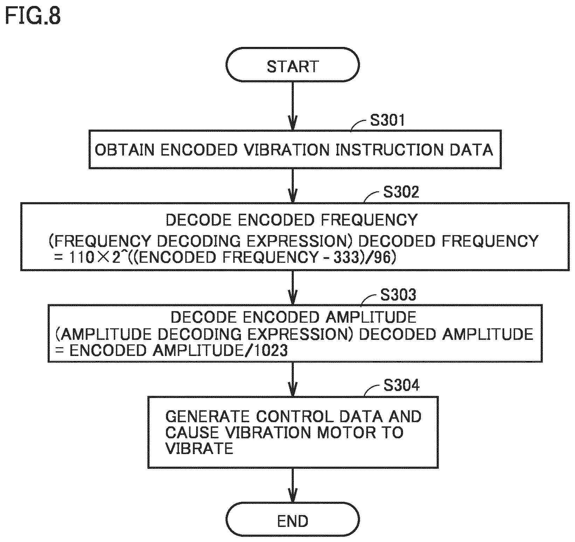

A flowchart showing a procedure of decoding the encoded vibration instruction data performed in game controller 200 will be described with reference to Fig. 8. Processor 202 obtains the encoded vibration instruction data (step S301). Processor 202 decodes the encoded frequency based on the frequency decoding expression (expression C) above (step S302). In other words, the decoded frequency is calculated. The decoded frequency may be truncated (or rounded off) to significant digit(s).

Processor 202 decodes the encoded amplitude based on the amplitude decoding expression (expression D) above (step S303). In other words, the decoded amplitude is calculated. Processor 202 generates the control data based on the decoded frequency and the decoded amplitude and causes vibration motor 206 to vibrate (step S304).

Specifically, processor 202 determines an input voltage for each control cycle and generates the control data. In the present example, the control cycle is shorter than the predetermined cycle (5 ms) described above, and it is set, for example, to 0.125 ms. Processor 202 determines a voltage value for each control cycle based on the indicated frequency and the indicated amplitude in the vibration instruction data by executing control data generation program 2031. A vibration waveform is thus finely controllable. Any period of the control cycle may be set, and the period may be as long as the predetermined cycle described above.

Thus, in the present embodiment, by using the frequency encoding and decoding expressions above, while the amount of communication between game device 100 and game controller 200 is suppressed, encoding processing in consideration of sound can be performed.

In the present embodiment, an example in which all of tones in the twelve-tone equal temperament are expressed with the frequency decoding expression (expression C) above is described. Encoding of the frequency, however, is not limited to the frequency encoding expression shown above, and a constant (a first constant, a second constant, and a third constant) included in the encoding expression may be modified depending on design.

An example in which at least one constant is modified in the encoding expression above will be described below. In the frequency encoding and decoding expressions, the first constant should only be a multiple of the number of tones included in one musical scale. A frequency ratio of the musical scale can be calculated based on the number of tones included in one musical scale in an equal temperament. In an example where a temperament to be expressed is the twelve-tone equal temperament, the first constant should only be a multiple of twelve. In an example where a temperament to be expressed is the seven-tone equal temperament, the first constant should only a multiple of seven. Therefore, by adjusting the first constant, each of the five-tone equal temperament, the seven-tone equal temperament, the twelve-tone equal temperament, the fifteen-tone equal temperament, the seventeen-tone equal temperament, a nineteen-tone equal temperament, a twenty-two-tone equal temperament, a thirty-one-tone equal temperament, a thirty-four-tone equal temperament, a forty-one-tone equal temperament, a fifty-three-tone equal temperament, and a seventy-two-tone equal temperament can be expressed.

In the frequency encoding and decoding expressions, the second constant may be a frequency of at least one tone in the equal temperament or may be a value calculated by multiplying the frequency of at least one tone in the equal temperament by $2^{1/\text{first constant}}$ or $2^{-1/\text{first constant}}$ predetermined number of times. In other words, the second constant is $2^{N/\text{first constant}}$, where N is an integer. The frequency of each note in the equal temperament is thus included in the decoded frequency. The second constant may be a multiple of the lowest tone (27.500 Hz) among tones included in the equal temperament. For example, the second constant can be such a value as 55, 82.5, 110, 137.5, or 220.

The third constant serves to shift a range of frequencies that can be expressed with the encoding expression (expression A) and should only be determined in accordance with a lower limit and an upper limit of the frequency desired to be expressed.

[H. Switching Between Sound Output Permitted/Non-Permitted States]

Switching between a state in which vibration at the frequency in the audible range is outputted from vibration motor 206 and a state otherwise will then be described. A graph showing a value of the maximum input voltage for each indicated frequency will be explained with reference to Fig. 9. As shown in Fig. 9, vibration motor 206 in the present embodiment is high in vibration efficiency when it operates at 100 Hz. When a high voltage is inputted at this frequency, vibration is excessively large. Therefore, when the vibration motor operates at 100 Hz, a value of the maximum input voltage lowers to 2.5 V. At a frequency at which vibration efficiency is poor, the value of the maximum input voltage is increased to prevent vibration from weakening.

As described above, vibration motor 206 outputs a tone based on sound file 105B that designates a frequency band (for example, a frequency band from 400 Hz to 3500 Hz) in the audible range. In game device 100 in the present embodiment, for the maximum input voltage for each frequency, second setting f2 described previously has been made by default (second setting f2 is shown with a solid line at the frequency of 400 Hz or lower and with a dotted line at the frequency of 400 Hz or higher in Fig. 9). The game device is thus set such that vibration in the frequency band in the audible range is turned off or weakened. A game application or the user can change to first setting f1 (first setting f1 is shown with a solid line in Fig. 9), so that vibration in the frequency band in the audible range is outputted.

When a sound output permission/non-permission state is set to "permitted", game device 100 sets the maximum input voltage for each frequency to first setting f1 such that vibration motor 206 can vibrate in the frequency band from 400 Hz to 3500 Hz. When the sound output permission/non-permission state is set to "not permitted," game device 100 sets the maximum input voltage to second setting f2 such that vibration motor 206 does not vibrate in the frequency band from 400 Hz to 3500 Hz.

When the game program indicates the frequency from 400 Hz to 3500 Hz while second setting f2 has been set, in spite of the indicated amplitude value being 1.0, a control voltage of vibration motor 206 is low and the tone weakens or is not outputted, or a loud tone is not outputted.

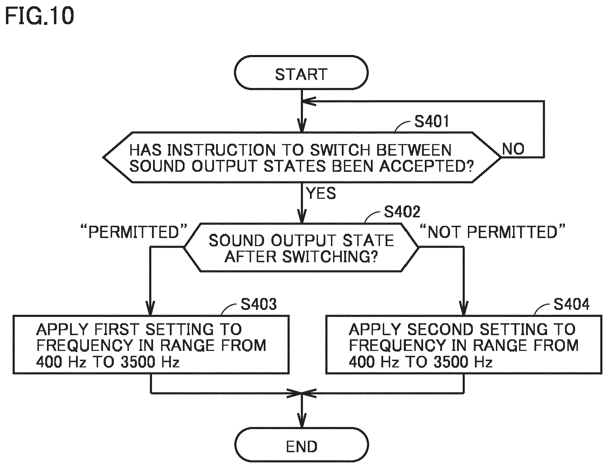

A flowchart showing a procedure of switching between the sound output permission/non-permission states performed in game device 100 will be described with reference to Fig. 10. Processor 101 determines whether or not it has accepted an instruction to switch between the sound output permission/non-permission states from the game application (step S401). When processor 101 has not accepted the instruction to switch between the sound output permission/non-permission states (NO in step S401), it repeats processing in step S401.

When processor 101 has accepted the instruction to switch between the sound output permission/non-permission states (YES in step S401), it determines whether the instruction indicates switching to permission or non-permission to output sound (step S402). When the instruction indicates switching to permission to output sound, processor 101 sets the maximum input voltage for each frequency to first setting f1 (step S403). With first setting f1, vibration motor 206 can be driven based on the frequency in the range from 400 Hz to 3500 Hz. In other words, vibration motor 206 can output a tone.

When the instruction indicates switching to non-permission to output sound, processor 202 sets the maximum input voltage for each frequency to second setting f2 (step S404). Drive of vibration motor 206 based on the frequency in the range from 400 Hz to 3500 Hz is restricted. In other words, vibration motor 206 cannot output a tone.

**[I. Modification]**

Other forms which are partial modification of the embodiment described above will be described below.

Though an example in which information processing system 10 in the present embodiment is applied to the game system is described above, the system to which the information processing system is to be applied is not limited to the game system. Information processing system 10 in the present embodiment may be employed, for example, for a practical application other than what is called a video game, toys for children, a training system for virtual drive of a car with the use of VR or the like, and the like.

The example described above shows an exemplary configuration in which the game system applied to information processing system 10 includes a single game controller 200, the game system applied to information processing system 10 may include a plurality of game controllers 200.

The processor included in game device 100 and game controller 200 may be configured with a single chip or a plurality of chips.

Storage of a plurality of pieces of data in an identical row in an identical table is referred to as "being associated" in the example described above. Without being limited as such, the term "being associated" encompasses a plurality of pieces of data being indirectly associated among a plurality of tables.

Though game program 102P2 indicates normalized data for the amplitude in the example described above, the amplitude indicating a voltage value to be used in the control data may directly be designated.

In the example described above, encoding and decoding are described as being performed owing to storage of the frequency encoding expression (expression A) in game device 100 and storage of the decoding expression (expression C) corresponding to the encoding expression in game controller 200. Encoding and decoding, however, do not have to be performed with the use of the expressions. For example, as shown in Fig. 4, a table in which frequencies are associated with values from 0 to 1023 that can be taken by the encoded frequency may be stored in both of game device 100 (for encoding) and game controller 200 (for decoding). In this case, a frequency closest to the indicated frequency in the vibration instruction data among frequencies in this table is determined and the encoded frequency corresponding thereto is set. In using the table, a temperament to be expressed may be a temperament other than the equal temperament, such as just intonation or Pythagorean tuning. When encoding and decoding are performed with the use of the expression as in the present embodiment, a capacity of data to be stored can be less than in an example where a table is used.

The description above explains that the first constant should only be a multiple of the number of tones included in one musical scale. The first constant may further be a common multiple of a first constant in the encoding expression (expression A) in another information processing system. Another system may be another game machine, a general-purpose PC, or the like to which game controller 200 is connectable or which can execute a common game application. More specifically, another system may be an old-model game device 100 or the like that has previously been sold. Game controller 200 that has been driven in another system is thus applicable also to game device 100 in the present embodiment. In other words, compatibility between game device 100 in the present embodiment and another system can be improved.

An example in which encoding processing is performed in game device 100 and decoding processing is performed in game controller 200 is described above. An apparatus where the encoding processing and the decoding processing are performed is not limited thereto. For example, the encoding processing may be performed in a server and the decoding processing may be performed in a game device or a game controller. In an example where the vibration instruction data is transmitted through an external server from game device 100 to another game device or game controller 200, the external server may perform the encoding processing or the decoding processing. Furthermore, a destination to which game device 100 transmits the encoded vibration instruction data may be another game device, instead of the game controller. In other words, the decoding processing may be performed in another game device.

The vibration instruction data is described above as data including the frequency and the amplitude. Data indicating the frequency and data indicating the amplitude, however, do not have to be assembled in one piece of data as the vibration instruction data, but may separately be transmitted and received between game device 100 and game controller 200.

Though the frequency in the effective band of vibration is described above as being from 40 Hz to 400 Hz and the frequency in the audible range is described above as being from 400 Hz to 3500 Hz, these specific numerical values can be modified as appropriate.

The example described above explains that, in the approximate value specifying processing, in step S204, the encoded frequency is rounded down to a nearest integer, and in step S206, one is added to the encoded frequency. In the approximate value specifying processing, however, in step S204, the encoded frequency may be rounded up to the nearest integer, and in step S206, one may be subtracted from the encoded frequency. The approximate value specifying processing may be fraction processing simply by rounding off as in the case of the amplitude, or the approximate value specifying processing does not have to be performed.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

While certain example systems, methods, devices, and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing system (10) comprising:

   a first information processing apparatus (100); and
   a second information processing apparatus (200) comprising a vibration motor (206), wherein
   the first information processing apparatus (100) comprises

   frequency instruction data generation means configured to generate frequency instruction data that indicates a control frequency of the vibration motor (206),
   first encoding means configured to encode the frequency instruction data based on each frequency of each note on a predetermined musical scale, and
   transmission means configured to transmit the encoded frequency instruction data to the second information processing apparatus, and

   the second information processing apparatus (200) comprises

   reception means configured to receive the encoded frequency instruction data,
   first decoding means configured to decode the encoded frequency instruction data based on the frequency of a tone on the predetermined musical scale, and
   vibration means configured to cause the vibration motor (206) to vibrate based on the decoded frequency instruction data.

2. The information processing system according to claim 1, wherein

   the first encoding means is configured to encode a frequency F indicated by the frequency instruction data to an encoded value X (an integer) with an expression 1 or an expression 2 below,

   $$X = \text{first constant} \times (\log_2(F/\text{second constant})) \qquad \ldots \text{(expression 1)}$$

   $$X = \text{first constant} \times (\log_2(F/\text{second constant})) + \text{third constant}$$

   $$\text{(expression 2)}$$

   the first constant is one of 5, 7, 12, 15, 17, 19, 22, 31, 34, 41, 53, and 72 or a multiple thereof,
   the second constant is a frequency of one tone of tones on the predetermined musical scale or a constant that satisfies an expression 3 below, and second constant = frequency of one of tones on predetermined musical scale $\times\ 2^{N\ /\text{first}}$ constant     (expression 3)

**the third** constant is a predetermined integer.

3. The information processing system according to claim 2, wherein

the first encoding means is configured to determine to which of a frequency corresponding to the encoded value X and a frequency corresponding to the encoded value X + 1 the frequency F indicated by the frequency instruction data is closer, when the encoded value X is obtained, and
when the frequency F indicated by the frequency instruction data is closer to the frequency corresponding to the encoded value X + 1 than the frequency corresponding to the encoded value X, the encoded value X is updated to a value of the encoded value X + 1.

4. The information processing system according to claim 2, wherein
the predetermined musical scale is a musical scale in a twelve-tone equal temperament and the first constant is twelve or a multiple of twelve.

5. The information processing system according to claim 2, wherein
the first constant is a common multiple of one of 5, 7, 12, 15, 17, 19, 22, 31, 34, 41, 53, and 72 and a value corresponding to a first constant in encoding processing by another information processing system.

6. The information processing system according to any of claims 1 to 5, wherein

the frequency instruction data comprises first frequency instruction data and second frequency instruction data for vibration of the vibration motor,
the first frequency instruction data is configured to indicate at least a frequency in an effective band of vibration, and
the second frequency instruction data is configured to indicate at least vibration in an audible band.

7. The information processing system according to claim 6, wherein
the first frequency instruction data and the second frequency instruction data are configured to indicate both of the effective band of vibration and the audible band.

8. The information processing system according to any of claims 1 to 7, wherein

the first information processing apparatus (100) further comprises

amplitude instruction data generation means configured to generate amplitude instruction data that indicates a control amplitude of the vibration motor (206), and
second encoding means configured to linearly encode the amplitude instruction data,

the transmission means is configured to transmit each of the encoded frequency instruction data and the encoded amplitude instruction data,
the reception means is configured to receive each of the encoded frequency instruction data and the encoded amplitude instruction data,
the second information processing apparatus (200) further comprises second decoding means configured to linearly decode the encoded amplitude instruction data, and
the vibration means is configured to cause the vibration motor to vibrate based on the decoded frequency instruction data and the decoded amplitude instruction data.

9. The information processing system according to any of claims 1 to 5, wherein

the first information processing apparatus (100) further comprises adjustment means configured to change the frequency indicated by the frequency instruction data to a frequency in a non-audible range or to cancel an instruction when the indicated frequency is a frequency in an audible range, and
the information processing system comprises deactivation means configured to deactivate the adjustment means in accordance with an instruction from an application.

**10.** The information processing system according to any of claims 1 to 5, wherein

the first information processing apparatus (100) is a game machine, and
the second information processing apparatus (200) is a game controller.

**11.** An encoding device (100) configured to communicate with a second information processing apparatus (200) comprising a vibration motor (206), the encoding device comprising:

frequency instruction data generation means configured to obtain frequency instruction data that indicates a control frequency of the vibration motor (206);
first encoding means configured to encode the frequency instruction data based on each frequency of each note on a predetermined musical scale; and
transmission means configured to output the encoded frequency instruction data.

**12.** A decoding device (200) configured to communicate with a first information processing apparatus (100), the decoding device comprising:

a vibration motor (206);
reception means configured to receive encoded frequency instruction data;
first decoding means configured to decode the encoded frequency instruction data based on a frequency of a tone on a predetermined musical scale; and
vibration means configured to cause the vibration motor to vibrate based on the decoded frequency instruction data.

**13.** A method to be used in an information processing system (10) configured to control vibration instruction data for vibration of a vibration motor (206), the method comprising:

as operations to be performed by one or more first processors (101),

generating frequency instruction data that indicates a control frequency of the vibration motor (206);
encoding the frequency instruction data based on each frequency of each note on a predetermined musical scale; and
transmitting the encoded frequency instruction data;

as operations to be performed by one or more second processors (202),

receiving the encoded frequency instruction data;
decoding the encoded frequency instruction data based on the frequency of a tone on the predetermined musical scale; and
causing the vibration motor to vibrate based on the decoded frequency instruction data.

**14.** An encoding program causing a computer to perform operations comprising:

obtaining frequency instruction data that indicates a control frequency of a vibration motor; and
encoding the frequency instruction data based on each frequency of each note on a predetermined musical scale.

**15.** A decoding program causing a computer to perform operations comprising:

obtaining encoded frequency instruction data, the encoded frequency instruction data resulting from encoding of frequency instruction data that indicates a control frequency of a vibration motor; and
decoding the encoded frequency instruction data based on a frequency of a tone on a predetermined musical scale.

FIG.1

FIG.2

```
          ┌─102P2                                    ┌─102P1
┌──────────────────────┐  VIBRATION    ┌──────────────────────────┐
│   GAME PROGRAM       │  INSTRUCTION  │   SYSTEM PROGRAM          │
│        ┌─105A        │  DATA                        ┌─En1        │
│ ┌──────────────────┐ │───────────────│──►  ┌──────────────────┐ │
│ │  VIBRATION FILE  │ │               │     │    ENCODING      │ │
│ └──────────────────┘ │  VIBRATION    │──►  │    PROGRAM       │ │
│        ┌─105B        │  INSTRUCTION  │     └──────────────────┘ │
│ ┌──────────────────┐ │  DATA         └──────────────┬───────────┘
│ │   SOUND FILE     │ │──────────────────  ENCODED VIBRATION
│ └──────────────────┘ │                    INSTRUCTION DATA
└──────────────────────┘
                                                       │
                                                       ▼
                                        ┌──────────────────────────┐
                                        │ MCU                ┌─201  │
                                        │                          │
                                        │                    ┌─De1 │
                                        │          ┌──────────────┐ │
                                        │          │  DECODING    │ │
                                        │          │  PROGRAM     │ │
                                        │          └──────────────┘ │
                                        │ DECODED          │        │
                                        │ VIBRATION        ▼        │
                                        │ INSTRUCTION  ┌─204B2       │
                                        │ DATA     ┌──────────────┐ │
                                        │          │ CONTROL DATA │ │
                                        │          │ AREA         │ │
                                        │          └──────────────┘ │
                                        └──────────────────┬────────┘
                                         CONTROL           │
                                         DATA              ▼    ┌─205
                                        ┌──────────────────────────┐
                                        │       AMPLIFIER          │
                                        └──────────────┬───────────┘
                                                       ▼    ┌─206
                                        ┌──────────────────────────┐
                                        │     VIBRATION MOTOR      │
                                        └──────────────────────────┘
```

FIG.3

105B

| SOUND FILE | |
|---|---|
| FREQUENCY | AMPLITUDE |
| 27.500 | 1.0 |
| 29.135 | 1.0 |
| 55.000 | 1.0 |
| ⋮ | ⋮ |

ENCODING →

114

| ENCODED VIBRATION INSTRUCTION DATA | |
|---|---|
| FREQUENCY | AMPLITUDE |
| 141 | 1023 |
| 149 | 1023 |
| 237 | 1023 |
| ⋮ | ⋮ |

DECODING →

110

| DECODED VIBRATION INSTRUCTION DATA | |
|---|---|
| FREQUENCY | AMPLITUDE |
| 27.500 | 1.0 |
| 29.135 | 1.0 |
| 55.000 | 1.0 |
| ⋮ | ⋮ |

# FIG.4

| MUSICAL SCALE (TWELVE-TONE EQUAL TEMPERAMENT) | FREQUENCY (Hz) | ENCODED FREQUENCY |
|---|---|---|
| – | 9.936 | 0 |
| – | 10.008 | 1 |
| ⋮ | ⋮ | ⋮ |
| LA 0(A0) | 27.500 | 141 |
| ⋮ | ⋮ | ⋮ |
| LA #0(A#0) | 29.135 | 149 |
| ⋮ | ⋮ | ⋮ |
| LA 1(A1) | 55.000 | 237 |
| ⋮ | ⋮ | ⋮ |
| LA 2(A2) | 110.000 | 333 |
| ⋮ | ⋮ | ⋮ |
| DO 4(C4) | 261.626 | 453 |
| ⋮ | ⋮ | ⋮ |
| LA 2(A2) | 440.000 | 525 |
| ⋮ | ⋮ | ⋮ |
| – | 698.456 | 589 |
| ⋮ | ⋮ | ⋮ |
| – | 1002.134 | 639 |
| ⋮ | ⋮ | ⋮ |
| – | 2004.268 | 735 |
| ⋮ | ⋮ | ⋮ |
| DO 8(C8) | 4186.009 | 837 |
| ⋮ | ⋮ | ⋮ |
| – | 16034.14 | 1023 |

# FIG.5

| | EVENT OCCURRENCE CONDITION | | VIBRATION CONTENTS | |
|---|---|---|---|---|
| EVENT NAME | OBJECT 1 | OBJECT 2 | FREQUENCY | AMPLITUDE |
| FIRST VIBRATION EVENT | SWORD | SWORD | 100 | 1.0 |
| SECOND VIBRATION EVENT | SWORD | SHIELD | 50 | 0.8 |
| THIRD VIBRATION EVENT | SWORD | ROCK | 50 | 0.7 |
| FIRST SOUND EVENT | SWORD | SWORD | 2000 | 1.0 |
| SECOND SOUND EVENT | SWORD | SHIELD | 1000 | 0.8 |
| THIRD SOUND EVENT | SWORD | ROCK | 700 | 0.7 |
| ⋮ | ⋮ | | ⋮ | ⋮ |

105A — FIRST VIBRATION EVENT, SECOND VIBRATION EVENT, THIRD VIBRATION EVENT

105B — FIRST SOUND EVENT, SECOND SOUND EVENT, THIRD SOUND EVENT

ENCODING

114

**ENCODED VIBRATION INSTRUCTION DATA**

| FREQUENCY | AMPLITUDE |
|---|---|
| 320 | 1023 |
| 224 | 818 |
| 224 | 716 |
| 735 | 1023 |
| 639 | 818 |
| 589 | 716 |
| ⋮ | ⋮ |

DECODING

110

**DECODED VIBRATION INSTRUCTION DATA**

| FREQUENCY | AMPLITUDE |
|---|---|
| 100.145 | 1.0 |
| 50.072 | 0.8 |
| 50.072 | 0.7 |
| 2004.268 | 1.0 |
| 1002.134 | 0.8 |
| 698.456 | 0.7 |
| ⋮ | ⋮ |

FIG.6

```
              ┌──────────────┐
              │    START     │
              └──────┬───────┘
                     │
                     ▼         ┌─ S101
         ┌──────────────────────┐
         │ OBTAIN OPERATION     │
         │ DATA                 │
         └──────────┬───────────┘
                    │           ┌─ S102
         ┌──────────────────────┐
         │ OPERATION BY GAME    │
         │ OBJECT               │
         └──────────┬───────────┘
                    │           ┌─ S103
        ╱───────────────────────╲        NO
       ⟨ HAS ONE OF VIBRATION EVENT ⟩ ──────▶
        ╲ OR SOUND EVENT OCCURRED? ╱
                    │ YES
                    ▼           ┌─ S104
         ┌──────────────────────┐
         │ PASS VIBRATION INSTRUCTION │
         │ DATA TO SYSTEM PROGRAM     │
         └──────────┬───────────┘
                    │           ┌─ S105
         ┌──────────────────────┐
         │ OTHER PROCESSING FOR │
         │ PROCEEDING WITH GAME │
         └──────────┬───────────┘
                    │
                    └──────────────▶
```

FIG.7

```
                        ┌─────────────┐
                        │    START    │
                        └─────────────┘
                               │
                               ▼           ⟋S201
        ┌──────────────────────────────────────────────┐
        │     OBTAIN VIBRATION INSTRUCTION DATA         │
        └──────────────────────────────────────────────┘
                               │
                               ▼           ⟋S202
        ┌──────────────────────────────────────────────┐
        │       FREQUENCY CLAMPING PROCESSING           │
        └──────────────────────────────────────────────┘
                               │
                               ▼           ⟋S203
        ┌──────────────────────────────────────────────┐
        │               ENCODE FREQUENCY                │
        │  (FREQUENCY ENCODING EXPRESSION) ENCODED      │
        │  FREQUENCY                                    │
        └──────────────────────────────────────────────┘
```

**S203** ENCODE FREQUENCY (FREQUENCY ENCODING EXPRESSION) ENCODED FREQUENCY $= 96 \times \log_2(\text{FREQUENCY}/110) + 333$

**S204** PERFORM PROCESSING FOR DISCARDING ALL DIGITS TO RIGHT OF DECIMAL POINT, ON ENCODED FREQUENCY

**S205** DECODE ENCODED FREQUENCY AND ENCODED FREQUENCY+1 (FREQUENCY DECODING EXPRESSION) DECODED FREQUENCY $= 110 \times 2^{\wedge}((\text{ENCODED FREQUENCY} - 333)/96)$

**S206** IS FREQUENCY INCLUDED IN VIBRATION INSTRUCTION DATA IN STEP S201 CLOSER TO VALUE OF DECODED FREQUENCY OF ENCODED FREQUENCY+1 THAN DECODED FREQUENCY OF ENCODED FREQUENCY? — NO

YES

**S207** VALUE OF ENCODED FREQUENCY = ENCODED FREQUENCY+1

**S208** DOES TOTAL OF AMPLITUDES INCLUDED IN VIBRATION INSTRUCTION DATA THAT INDICATES VIBRATION AT SAME TIMING EXCEED 1? — NO

YES

**S209** PROCESSING FOR UPDATING AMPLITUDE

**S210** ENCODE AMPLITUDE (AMPLITUDE ENCODING EXPRESSION) ENCODED AMPLITUDE = AMPLITUDE $\times 1023$

**S211** PERFORM FRACTION PROCESSING BY ROUNDING OFF ON ENCODED AMPLITUDE

**S212** PASS ENCODED VIBRATION INSTRUCTION DATA TO GAME CONTROLLER

END

FIG.8

```
                      ┌─────────────┐
                      │    START    │
                      └─────────────┘
                             │
                             ▼          ┌─ S301
        ┌──────────────────────────────────────────────┐
        │ OBTAIN ENCODED VIBRATION INSTRUCTION DATA     │
        └──────────────────────────────────────────────┘
                             │
                             ▼          ┌─ S302
        ┌──────────────────────────────────────────────┐
        │          DECODE ENCODED FREQUENCY            │
        │ (FREQUENCY DECODING EXPRESSION) DECODED FREQUENCY │
        │   = 110×2^((ENCODED FREQUENCY - 333)/96)     │
        └──────────────────────────────────────────────┘
                             │
                             ▼          ┌─ S303
        ┌──────────────────────────────────────────────┐
        │          DECODE ENCODED AMPLITUDE            │
        │ (AMPLITUDE DECODING EXPRESSION) DECODED AMPLITUDE │
        │   = ENCODED AMPLITUDE/1023                   │
        └──────────────────────────────────────────────┘
                             │
                             ▼          ┌─ S304
              ┌────────────────────────────┐
              │ GENERATE CONTROL DATA AND  │
              │ CAUSE VIBRATION MOTOR TO   │
              │ VIBRATE                    │
              └────────────────────────────┘
                             │
                             ▼
                      ┌─────────────┐
                      │     END     │
                      └─────────────┘
```

FIG.9

MAXIMUM
ALLOWABLE
VOLTAGE (V)
FOR EACH
FREQUENCY

5

2.5

LnON

LnOFF

40 50   100        400    500    600    FREQUENCY (Hz)

FIG.10

```
                    ┌─────────────────┐
                    │      START      │
                    └────────┬────────┘
                             │ ◄──────────────────────────┐
                             ▼                            │
                    ╱───────────────────────────╲  S401   │
                  ╱  HAS INSTRUCTION TO SWITCH BETWEEN ╲ NO │
                  ╲  SOUND OUTPUT STATES BEEN ACCEPTED? ╱───┘
                    ╲───────────────────────────╱
                             │ YES
                             ▼
                    ╱──────────────────╲  S402
   "PERMITTED" ╱   SOUND OUTPUT STATE   ╲ "NOT PERMITTED"
         ┌────╲    AFTER SWITCHING?     ╱────┐
         │     ╲──────────────────────╱      │
         ▼  S403                             ▼  S404
┌──────────────────────┐          ┌──────────────────────┐
│ APPLY FIRST SETTING TO│          │ APPLY SECOND SETTING TO│
│ FREQUENCY IN RANGE FROM│         │ FREQUENCY IN RANGE FROM│
│ 400 Hz TO 3500 Hz     │          │ 400 Hz TO 3500 Hz     │
└───────────┬──────────┘          └───────────┬──────────┘
            └──────────────┬──────────────────┘
                           ▼
                  ┌─────────────────┐
                  │       END       │
                  └─────────────────┘
```

Europäisches
Patentamt

European
Patent Office

Office européen
des brevets

# EUROPEAN SEARCH REPORT

**Application Number**

EP 25 18 5163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/064925 A1 (KIM HYEONG JUN [KR] ET AL) 28 February 2019 (2019-02-28) | 1,8,13 | INV.<br>A63F13/285 |
| Y | * paragraph [0036] - paragraph [0037] *<br>* paragraph [0129] *<br>* paragraph [0161] - paragraph [0163] *<br>* figure 17 * | 2-7,<br>9-12,14,<br>15 | A63F13/424 |
| Y | US 2023/249064 A1 (MURPHY ALAN [GB] ET AL) 10 August 2023 (2023-08-10) | 10-12,<br>14,15 | |
| A | * paragraph [0050] - paragraph [0051] * | 1,13 | |
| Y | DAI JIAJIE ET AL: "Singing together: Pitch accuracy and interaction in unaccompanied unison and duet singing", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 145, no. 2, 4 February 2019 (2019-02-04), pages 663-675, XP012235145, ISSN: 0001-4966, DOI: 10.1121/1.5087817 [retrieved on 2019-02-04] * section IV.A; page 667 * | 2-5 | |
| Y | US 2021/034157 A1 (LEE SANGWON [US] ET AL) 4 February 2021 (2021-02-04) * paragraph [0027] * * figure 3 * | 6,7,9 | |

**TECHNICAL FIELDS SEARCHED (IPC)**

A63F

The present search report has been drawn up for all claims

| Place of search | Date of completion of the search | Examiner |
|---|---|---|
| The Hague | 20 October 2025 | Sindic, Gilles |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................
& : member of the same patent family, corresponding
   document

EPO FORM 1503 03.82 (P04C01)

**EP 4 674 492 A1**

## ANNEX TO THE EUROPEAN SEARCH REPORT
## ON EUROPEAN PATENT APPLICATION NO.

EP 25 18 5163

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | Publication date | Patent family member(s) | Publication date |
|---|---|---|---|
| US 2019064925 A1 | 28-02-2019 | CN 109154857 A | 04-01-2019 |
| | | CN 114100114 A | 01-03-2022 |
| | | EP 3379382 A2 | 26-09-2018 |
| | | EP 3760286 A1 | 06-01-2021 |
| | | EP 4129429 A1 | 08-02-2023 |
| | | KR 101790892 B1 | 26-10-2017 |
| | | KR 20170129651 A | 27-11-2017 |
| | | KR 20220130064 A | 26-09-2022 |
| | | US 2019064925 A1 | 28-02-2019 |
| | | US 2020050279 A1 | 13-02-2020 |
| | | US 2020379571 A1 | 03-12-2020 |
| | | US 2022121286 A1 | 21-04-2022 |
| | | WO 2017200258 A2 | 23-11-2017 |
| US 2023249064 A1 | 10-08-2023 | CN 116578179 A | 11-08-2023 |
| | | EP 4226985 A1 | 16-08-2023 |
| | | GB 2615548 A | 16-08-2023 |
| | | US 2023249064 A1 | 10-08-2023 |
| US 2021034157 A1 | 04-02-2021 | NONE | |

EPO FORM P0459

For more details about this annex : see Official Journal of the European Patent Office, No. 12/82

**EP 4 674 492 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016202486 A